# EUROPEAN PATENT SPECIFICATION

(11) **EP 4 226 774 B1**
(45) Date of publication and mention of the grant of the patent: **13.11.2024**
(21) Application number: 22156282.0
(22) Date of filing: 11.02.2022
(51) Int. Cl.: A23L 25/00, A23L 3/005, A23L 3/26, A23L 3/30

(54) **METHODS OF PREPARATION OF CULINARY NUT PASTE USING NUT SHELL MATERIAL AND RELATED PRODUCTS**
VERFAHREN ZUR HERSTELLUNG VON KULINARISCHER NUSSPASTE UNTER VERWENDUNG VON NUSSSCHALENMATERIAL UND VERWANDTEN PRODUKTEN
PROCÉDÉS DE PRÉPARATION DE PÂTE DE NOIX CULINAIRES UTILISANT UNE MATIÈRE DE REVÊTEMENTS DE COQUES ET PRODUITS ASSOCIÉS

(43) Date of publication of application: 16.08.2023
(73) Proprietor: Re-Nut AG, 9000 St. Gallen (CH)
(72) Inventor: LAUX, Roland, 9000 St. Gallen (CH); HÜHN, Tilo, 8820 Wädenswil (CH)
(74) Representative: Grünecker Patent- und Rechtsanwälte PartG mbB

(56) References cited:
- EP-A1- 2 476 317
- EP-A1- 3 903 601
- WO-A1-2023/117561
- US-A1- 2005 084 549
- US-A1- 2020 236 982
- US-A1- 2020 297 013
- COLLINS J L ET AL: "A Research Note EFFECTS OF PEANUT SHELL FLOUR ON, FIRMNESS, COLOR AND ACCEPTANCE dF PEANUT BUTTER", JOURNAL OF FOOD SCIENCE, vol. 44, no. 3, 1 April 1979 (1979-04-01), pages 944 - 945, XP093099984

## Description

### FIELD OF INVENTION

This invention relates to methods and/or techniques for the production of a nut paste and related products, wherein nutshell material is incorporated to improve the yields of the bioactive materials and which exhibits prolonged storage stability and excellent organoleptic properties.

In certain embodiments, this invention relates to the use of surface-treated nut shells and/or surface-treated non-shelled nuts in ground form as filler material providing dietary fiber and/or bulk in the preparation of food.

### BACKGROUND OF THE INVENTION

In the past decades, the evaluation of the phenolic content and antioxidant activity of different plant-based materials has received increasing interest. Culinary nuts have garnered special attention since their regular consumption is associated with the reduction of risk of diseases such as cancer and cardiovascular diseases.

In conventional processing of nuts for food consumption, shell and skin materials of culinary nuts are often considered as undesired by-products and are discarded, which not only represents an economic problem for the producers but may also lead to a serious impact on the environment due to the combustion of residues.

However, recent studies indicate that shell materials of numerous culinary nuts likewise contain valuable dietary fibers and especially high amounts of antioxidants, such as polyphenols and flavonoids, which play an important role in the absorption or neutralization of free radicals. For instance, high antioxidant activity has been reported for shell materials of peanuts (B. Adhikari et al., Journal of the Saudi Society of Agricultural Sciences 2019, 18, 437-442), Pecan nuts (A. C. Pinheiro do Prado et al., Grasas Y Aceites 2009, 60(4), 330-335) and hazelnuts (T. Esposito et al., International Journal of Molecular Sciences 2017, 18, 392). In addition, walnut shell has been identified as a valuable source many natural compounds such as phenols and flavonoids which have potential inhibitory effect on pancreatic lipase (V. Akbari et al., Food Chemistry, 2012, 135: 2404-2410).

Hence, it would be desirable to provide methods of preparation of nut-based products, such as nut-based spreads or butter-like products, which make ideal use of the valuable ingredients of nut shells.

Conventional methods of preparing nut-based paste or butter-like spreads (as disclosed in US 2020/236982 A1, US 2020/297013 A1 or EP 2 476 317 A1, for example) often have the disadvantage that it is difficult to simultaneously achieve favorable organoleptic properties and texture, tasty appearance and high yields of nutritionally favorable components without a large number of processing steps, elaborate equipment and high production costs. US 2005/084549 A1 discoses a method comprising milling fenugreek seeds to obtain a mixture of embryo and husk, wherein the husk fraction is processed to provide a fiber rich fraction useful for pharmaceutical dosage. However, the provision of a nut paste with pleasant organoleptic properties is not addressed therein. J. L. Collins et al., Journal of Food Science 1979, 44(3), 944-945 discloses the preparation of peanut butter, wherein pre-treated and ground peanut shell flour is added to the butter composition. Plant-based fermented beverages on the basis of nuts, seeds or legumes are disclosed in WO 2023/117561 A1.

US 5,508,057 A discloses a method for the preparation of a nut paste with improved fluidity and texture, which, however, requires the use of a homogenizer which is operated at a high pressure while controlling the viscosity at less than 15 poise and maintaining the fat content of the paste at least about 45%.

It is known that some of the aforementioned difficulties may be mitigated by modifying the nut-based compositions before they are being subjected to mechanical processing. For example, US 2004/0081744 A1 discloses a method for producing a nut paste with smooth texture, wherein edible oils and liquid sweetening agents (e.g. honey and molasses) are added before grinding and comminution to facilitate the mechanical processing and to provide a nut butter spread with improved texture. However, addition of edible oils tends to promote rancidity and may lead to further reduced shelf stability due to the separation of solid and oil phases. Moreover, such additives are incompatible with the provision of low calorie and/or low fat nut paste products. Manufacturing of the latter typically requires additional pre-processing steps including defatting/deoiling of the nut kernels in combination with addition of water (see US 5,876,781 A or EP 3 903 601 A1, for example), which renders the nut paste susceptible to mold, fungus and bacterial growth, however.

Therefore, it remains desirable to provide a method which is capable of effectively processing culinary nuts while simultaneously providing high yields of the bioactive materials present in nut shells and enabling simple and inexpensive production of culinary nut paste with prolonged storage stability and low fat and/or low caloric properties.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for preparing a nut paste, comprising the steps of: a) treating the surface of nutshells and/or non-shelled nuts to remove surface contaminants from the shell material; b) preparing a mixture comprising at least one of: b1) surface-treated non-shelled nuts, b2) shelled culinary nuts and surface-treated nutshells, or b3) shelled culinary nuts and surface-treated non-shelled nuts; and c) grinding the mixture to an average particle size of 500 µm or less to provide a nut paste, the average particle size being measured as volume moment mean (D[4,3]); wherein almonds, pecans, walnuts, cashews, pistachios, peanuts, kola nuts, palm nuts, hazelnuts, filberts, Brazil nuts, macadamia nuts, chestnuts, or mixtures thereof are used as the non-shelled nuts or to provide the shell material, respectively; wherein the shelled culinary nuts are selected from a tree nut, seed or legume; wherein the mixture contains at least 0.05 wt.-% of surface-treated nutshell material based on the total weight of solids, and wherein the mixture does not contain added water. Advantageously, said method allows optimized extraction and yield of nutritionally beneficial components of both nut kernels and nut shells while enabling fast and inexpensive processing. In addition, elaborate separation of shell and husk material in advance may at least partly be omitted, which further simplifies the process and improves the yield of nutritionally useful components present in the shell.

In further aspects, the present invention relates to a nut paste obtainable by the aforementioned method, wherein the nut paste contains 5 wt.-% or more of the surface-treated nutshell material based on the total weight of solids.

In other aspects, the present invention relates to the use of surface-treated nut shells and/or surface-treated non-shelled nuts in ground form as filler material providing dietary fiber and/or bulk in the preparation of food, wherein almonds, pecans, walnuts, cashews, pistachios, kola nuts, palm nuts, hazelnuts, filberts, Brazil nuts, macadamia nuts, chestnuts, and mixtures thereof are used as the surface-treated non-shelled nuts or to provide the surface-treated nut shell material, respectively; and wherein the surface-treated nut shells and/or surface-treated have been ground without addition of water.

### BRIEF DESCRIPTION OF THE DRAWINGS

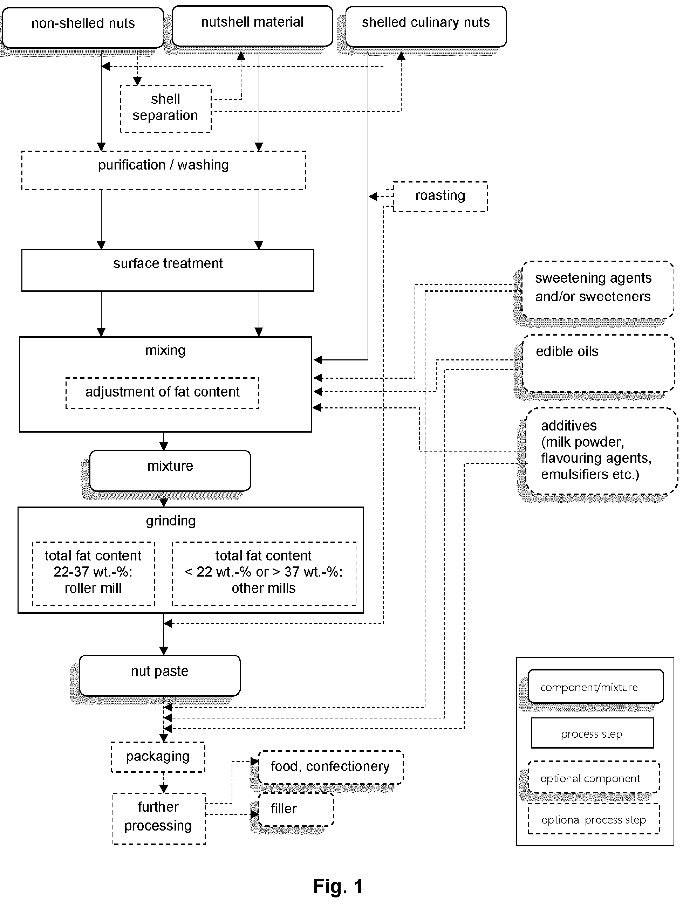

FIG. 1 is a flow chart illustrating an exemplary method of culinary nut processing to provide a nut paste in accordance to the present invention.

### DETAILED DESCRIPTION OF THE INVENTION

For a more complete understanding of the present invention, reference is now made to the following description of the illustrative embodiments thereof:

### Method for the Preparation of a Nut Paste

In a first embodiment, the present invention generally relates to a method for preparing a nut paste, comprising the steps of: a) treating the surface of nutshells and/or non-shelled nuts to remove surface contaminants from the shell material; b) preparing a mixture comprising at least one of: b1) surface-treated non-shelled nuts, b2) shelled culinary nuts and surface-treated nutshells, or b3) shelled culinary nuts and surface-treated non-shelled nuts; and c) grinding the mixture to an average particle size of 500 µm or less to provide a nut paste, the average particle size being measured as volume moment mean (D[4,3]); wherein almonds, pecans, walnuts, cashews, pistachios, peanuts, kola nuts, palm nuts, hazelnuts, filberts, Brazil nuts, macadamia nuts, chestnuts, or mixtures thereof are used as the non-shelled nuts or to provide the shell material, respectively; wherein the shelled culinary nuts are selected from a tree nut, seed or legume; wherein the mixture contains at least 0.05 wt.-% of surface-treated nutshell material based on the total weight of solids, and wherein the mixture does not contain added water.

An exemplary embodiment of the above-defined method is illustrated in Fig. 1.

The method for preparing a nut paste according to the present invention generally begins with a step a) of treating the surface of nutshells and/or non-shelled nuts to remove surface contaminants (such as soil- and dust-borne contaminants, pollutants, bacterial contaminants and/or mycotoxins, for example) from the shell. For this purpose, the surface of nutshells and/or non-shelled nuts may be subjected to chemical sterilization (for instance, with microbiocidal substances such as alcohols (e.g. ethanol), aldehydes, oxidizing agents, phenolics or quaternary ammonium compounds), washing in sterile water, enzymatic treatment, surface sterilization or pasteurization by means of heat and/or irradiation with ionizing rays, ultrasound-based sterilization and combinations thereof, for example.

Alternatively, or in addition, step a) may preferably include a step of stripping off the outermost layer of the surface of the nutshells and/or non-shelled nuts. A suitable technique includes abrasive blasting of the surface. In a particularly preferred embodiment, abrasive blasting is performed with bio-based abrasive media, such as fruit stone powders (e.g., powdered stones of olives, peaches, mangoes, plums, cherries, apricots or avocados) or nutshell-based abrasives, which offer a softer, gentler media blasting alternative in dry air blasting applications when compared to harsher materials such as metal oxide, glass bead or steel shot or steel grit media, and enable gentle abrasion of the surface while avoiding contact between the treated shell and foreign, non-edible matter. Accordingly, the potentially contaminated surface of the nutshell may be selectively removed while leaving the valuable nutshell constituents intact.

Preferred examples of nutshell-based abrasives include, but are not limited to abrasive media comprising walnut shells, pistachio shells or almond shells, for example. Walnut shell abrasives are particularly preferred in view of their chemically inertness, hardness, biodegradability, nontoxicity and wide availability.

In a further preferred embodiment, undesired micropollutants and odours, may be removed from surface of the nutshells and/or non-shelled nuts by adsorbing agents, such as activated carbon, for example.

In embodiments, non-shelled nuts may be subjected to step a) in a green state to make use of the favorably high antioxidant content when compared to the ripened nut. In this context, "green state" denotes a state before ripeness, which may be determined by the skilled artisan by methods known in the art (based on appearance, consistency, and/or water content, for example) in dependence of the individual nut type.

Step b) includes the preparation of a mixture comprising: b1) surface-treated non-shelled nuts, b2) shelled culinary nuts and surface-treated nutshells, and/or b3) shelled culinary nuts and surface-treated non-shelled nuts.

Since the nutshell material introduced into the mixture in step b) is retained in the final nut paste, it must be ensured that the nutshell does not contain effective amounts of allergens or toxic substances in the inner layer of the shell, which may be either accomplished by pretreating the nutshells to remove harmful substances (e.g. by extraction) prior to the addition to the mixture in step b) or by suitably selecting the nut type providing the nutshell according to its non-toxicity and low contents of allergens. According to the present invention, almonds, pecans, walnuts, cashews, pistachios, peanuts, kola nuts, palm nuts, hazelnuts, filberts, Brazil nuts, macadamia nuts, chestnuts, and mixtures thereof are employed as non-shelled nuts or to provide the shell material. In preferred embodiments, the nutshells are selected from hazelnut shells, peanut shells, walnut shells, almond shells, pistachio shells, and combinations thereof; and/or the non-shelled nuts are selected from non-shelled hazelnuts, non-shelled peanuts, non-shelled walnuts, non-shelled almonds, non-shelled pistachios, and combinations thereof.

On the other hand, for material only introduced as nut kernels in step b) (referred to herein as "shelled culinary nuts" in b2) and b3)), a wider choice of culinary nuts may be employed. The term "culinary nut", as used herein, denotes a tree nut, seed or legume, and includes any species of any genus of nuts, legumes, or seeds, and any mixtures thereof, while nuts, drupe seeds, nut-like gymnosperm seeds and nut-like angiosperm seeds are preferred. A single varietal or species may be used, or any conceivable mixtures of nuts, or mixtures of nuts and legumes, or combinations of tree nuts, seeds and legumes. As examples of nuts, almonds, pecans, walnuts, cashews, pistachios, peanuts, kola nuts, palm nuts, hazelnuts, filberts, Brazil nuts, macadamia nuts, chestnuts, and mixtures thereof may be mentioned, while suitable seeds may include oat, sesame seeds, pine nuts, sunflower seeds, pumpkin seeds, beans and/or rice for example. It is also within the scope of the present disclosure to use legumes (including, but not limited to soybeans, peanuts, navy beans, kidney beans, lima beans, string beans, pinto beans, chickpeas (garbanzo beans), lentils, peas, black-eyed peas, for example) particularly those falling into the definition of culinary nuts in ordinary parlance, such as peanuts, for example. In particularly preferred embodiments, the term "culinary nut" comprises hazelnuts, almonds, walnuts, cashews, pistachios, pecans, macadamia nuts, peanuts, and combinations thereof.

Before being subjected to step b), the culinary nuts may be pre-processed by sterilization, blanching, shocking, washing and combinations thereof.

In terms of the starting material, the nutshell and kernels may originate from the same type of nut or from different nut species and/or cultivars. In addition, as is indicated in Fig. 1, nutshells may optionally be separated from the kernels and the shelled nuts may be processed separately before being recombined in step b).

In step b), a mixture is prepared, comprising at least one of b1) surface-treated non-shelled nuts, b2) shelled culinary nuts and surface-treated nutshells, or b3) shelled culinary nuts and surface-treated non-shelled nuts. The processing of nutshells together with kernels eliminates the need for specialized equipment and processing steps required for the shell separation.

In preferred embodiments, the mixture comprises surface-treated non-shelled nuts or shelled culinary nuts and surface-treated nutshells in a (total) content of at least 1% by weight based on the total weight of solids, more preferably in a total content of from 5 to 100% by weight, and further preferably in a total content of from 10 to 100% by weight, such as from 40 to 100%, or from 60 to 100% by weight.

Optionally, further additives may be added to the mixture depending on the recipe and the desired textural and organoleptic properties. While not being limited thereto, exemplary additives may include sugars or other sweeteners (including maple syrup, honey, molasses, sucrose, fructose, glucose syrup, invert sugar, fruit sugar, corn syrup, sucralose, acesulfame potassium, aspartame, saccharin, cyclamates, acesulfame-K, thaumatin, chalcone, cyclamate, stevioside, stevia, sorbitol, xylitol and lactitol etc.), salt or salt substitutes, flavoring agents (e.g. cocoa powder, cocoa liquor, cocoa beans, coffee beans, vanillin or the like), milk powder, edible oils (essential oils or vegetable oils, such as palm oil, canola oil, peanut oil, walnut oil, rapeseed oil, cottonseed oil, soybean oil or coconut oil, for example), vitamins, minerals, proteins (e.g., whey protein, soy protein, albumin, sunflower seeds etc.), fruit pieces, herbs and/or spices (including without limitation cinnamon, ginger, coriander, cumin, turmeric, chili, pepper, cardamom, cloves, nutmeg, etc.), preservatives, colorants, thickeners, stabilizers (e.g. saturated triglycerides, monoglycerides, diglycerides and combinations thereof), emulsifiers (e.g., lecithin) and combinations thereof, for example.

In one exemplary embodiment, the mixture prepared in step b) comprises: surface-treated non-shelled nuts or shelled culinary nuts and surface-treated nutshells in a (total) content of from 5 to 99% by weight, preferably from 10 to 98% by weight; sweetening agents, sweeteners, or combinations thereof, in a total content of from 0.5 to 60% by weight, preferably from 1 to 40% by weight; one or more edible oils in a total content of from 0.1 to 55% by weight, preferably from 0.5 to 45% by weight; and one or more additives selected from milk powder, flavoring agents, emulsifiers and combinations thereof, in a total content of from 0.1 to 50% by weight, preferably from 0.5 to 40% by weight.

In general, the mixture prepared in step b) contains at least 0.05 wt.-% of surface-treated nutshell material based on the total weight of solids, which is well above trace amounts typically measured in conventional nut paste preparation. In order to make ideal use of the biologically active components of the nutshell, the mixture preferably contains at least 0.5 wt.-% of surface-treated nutshell material based on the total weight of solids, more preferably at least 1 wt.-% and further preferably at least 5 wt.-%. The upper limit is not particularly limited and may be suitably selected depending on the type of nutshell or the desired fat content of the nut paste, as will be further explained below.

According to the present invention, the mixture subjected to grinding in step c) does not contain added water or added aqueous liquids (including milk or the like), which means that step c) is performed as a dry-grinding step or that only lipophilic liquids (e.g. edible oils) previously added to the mixture are present during grinding. If water or aqueous solutions are used for washing in step a), they should be suitably removed before step c), e.g. by evaporation.

In step c), the mixture is ground to an average particle size of 500 µm or less to provide the nut paste. Average particle sizes of 200 µm or less, 100 µm or less, 50 µm or less or even 30 µm or less are further preferred in view of the texture and mouthfeel of the resulting nut paste. The grinding of the mixture may be carried out in one or in multiple steps. In general, the average particle size may be measured as volume moment mean (D[4,3]), and is typically defined by all particle sizes contributing according to their volume fraction in the collective, so that the average particle size in the interval is weighted with the corresponding volume portion and all these weighted values are averaged arithmetically. The particle sizes and their distribution may be suitably determined by methods known in the art (e.g. by a particle size analyzer).

In the preparation of the mixture in step b), it has been found that the total fat content of the mixture plays an important role in the processability in the grinding step c) and the organoleptic properties of the product.

Typically, kernels of culinary nuts exhibit a total fat content in the range of from about 40 to about 75 wt.-%.

In a particularly preferred embodiment of the method of the invention, surface-treated nutshells and/or the surface-treated non-shelled nuts are added in step b) until the mixture has a total fat content of from 22 to 37 wt.-%. Accordingly, by adding nutshell material as a filler, relatively low fat contents may be achieved without the necessity of a defatting or deoiling step, which typically involves a chemical treatment or a mechanical removal of oils and fats (e.g., with a hydraulic press, an expeller or a centrifuge), both of which tend to lead to a loss of sensitive antioxidants. Moreover, since the fat content is relatively low and the mixture does not contain added water, the rancidity of the nut paste is reduced and storage stability may be further improved. Last but not least, by adjusting the total fat content to the above range, the mixture may be smoothly ground in step c) by using a conventional roll mill, which substantially reduces the processing costs compared to the use of alternative grinding equipment. Specifically, it has been found that if the fat content of the mixture is less than 22 wt.-%, the mixture is non-flowable and causes blocking in roll mills, whereas fat contents of higher 37 wt.-% cause undesirable smearing in the roll grinding process, which is detrimental to the grinding effect and the resulting textural properties of the nut paste. In this embodiment, if the grinding in step c) consists of multiple grinding steps, at least the initial (coarse) grinding step is performed with a roller mill, whereas one or more fine grinding steps may also be performed with different mills or grinders. However, it is preferred that the entire grinding step c) down to the finest average particle size is performed with a single roll mill, or with multiple roll mills with descending roller nip sizes (i.e. space between the rollers).

In an alternative embodiment, the mixture prepared in step b) has a total fat content of less than 22 wt.-% or more than 37 wt.-%, such as from more than 37 wt.-% to 70 wt.-%, for example, which may be typically the case if small amounts of nutshell material are present and/or if edible oils are added to the mixture to promote the smoothness of the paste. In this case, step c) is preferably performed with a pin mill, a hammer mill, a screen mill, a colloid mill or combinations thereof, in order to provide a nutshell-containing nut paste with favorable texture.

Notably, the total fat content, as referred to herein, may be determined according to methods known to the skilled artisan, including gas chromatography (GC) or solvent extraction-gravimetric methods, among which GC methods are preferred.

As indicated above, it is preferred that the method of the present invention does not comprise a defatting or deoiling step at all. Instead, it is preferred to primarily control the fat content by adjusting the mixture in step b).

A heat treatment may be incorporated at several stages of the processing method to introduce roast flavors. For example, shelled culinary nuts may be roasted before the mixing step b) and/or non-shelled nuts may be roasted in the shell after the surface treatment and before step b) to promote processability in the grinding stage (see Fig. 1).

In some embodiments, it may be also preferable to subject the ground mass obtained in step c) to roasting, especially when additives such as flavorants, salts, sugars or other sweeteners have been added to the mixture, whereupon development of complex flavors during Maillard reactions occurring during roasting is further promoted. In a preferred embodiment, salt (e.g., sodium chloride) may be added before the roasting step in order to enhance the solubility of proteinogenic substances as precursors for the Maillard reactions.

While not being limited thereto, typical roasting temperatures will be generally in the range of more than 65°C and 200 °C or less, preferably between 70 and 160°C, such as from 80 to 150°C.

The method of carrying out the roasting is not particularly limited and may e.g. be accomplished in a drum dryer. In a preferred embodiment, the roasting step is carried out in a mixing device comprising a cylindrical, tubular body arranged with its axis horizontal and closed at its opposite ends by end plates, and having a coaxial heating or cooling jacket through which, for example, diathermic oil or another fluid is intended to flow to keep the internal wall of the body at a predetermined temperature. The tubular body has an inlet and outlet openings for the solid phase. The outlet opening communicates, by means of a duct, with a device for separating the aroma phase from the dried product. The device further comprises a bladed rotor is supported for rotation in the tubular body, its blades being arranged as a helix and oriented for centrifuging the solid phase being processed and simultaneously transporting it towards the outlet opening. The roasting step may be followed by a cooling step, which may be carried out by air cooling, for example.

In addition or in alternative, the finely ground paste obtained in step c) may be subjected to a pH modulation step, preferably before the optional roasting step, in order to modify the physical properties, taste profile and subsequent development of flavors. For this purpose, bases (alkalization) or acids (e.g., treatment with acetic acid or citric acid) may be employed.

The above-described methods enable simple, rapid and inexpensive preparation of a nut paste and make ideal use of the naturally present, nutritionally beneficial components.

### Nut Paste and Related Products

In a second embodiment, the present invention relates to a nut paste obtainable by the method according to the first embodiment described above.

The nut paste exhibits favorably smooth texture and mouthfeel due to the fine grinding step described in step c) and the therein described particle sizes. In addition, due to the incorporation of nutshell material as filler, the nut paste has favorably high contents of antioxidants and bioactive substances preserving the flavor substances. Furthermore, since no water has been added to the mixture subjected to grinding and low fat contents may be achieved, the nut paste is resistant to rancidity and/or microbiological contamination, which leads to an extended shelf life.

In general, the nut paste obtained in step c) may be directly packaged (e.g. in a container) and/or used for consumption or confectionery processing, for example.

Alternatively, the nut paste may be further processed to modify the flavor, sweetness, texture and/or viscosity of the product to the desired recipe, e.g. by mixing the same with additives described above with respect to step b). In a preferred embodiment, the nut paste is processed in a refiner or a refiner/conche (e.g. a MacIntyre all-in-one refiner/conche) in analogy to chocolate processing, to remove volatiles, acidity and moisture, to effect mixing with optional additives such as sugar, milk powder etc., and to improve the texture of the final product. If desired, larger particles may be introduced into the paste at this stage, including, but not limited to fruit pieces, nut particles (which may be roasted, oil-fried and/or sugar coated), coffee nibs, cocoa nibs, chocolate pieces, caramel pieces, or the like. In order to make full use of the benefits of the present invention, the final nut paste product contains at least 5 wt.-% of the surface-treated nutshell material based on the total weight of solids.

In addition, the nut paste may be optionally homogenized and/or ultrafinely ground to further reduce the particle size (e.g. to an average particle size of 25 µm or less or 15 µm or less) to create a smoother texture.

Exemplary confectioneries into which the nut paste of the present invention are incorporated are not specifically limited and may incorporate the nut paste as filling, topping or other ingredient in desserts, such as chocolates, cakes, pastries, cookies, confection, ice creams, sorbets, candy bars or the like.

### Use of Surface-Treated Nut Shell Material

In a third embodiment, the present invention relates to the use of surface-treated nut shells and/or surface-treated non-shelled nuts in ground form as filler material providing dietary fiber and/or bulk in the preparation of food; wherein almonds, pecans, walnuts, cashews, pistachios, kola nuts, palm nuts, hazelnuts, filberts, Brazil nuts, macadamia nuts, chestnuts, and mixtures thereof are used as the surface-treated non-shelled nuts or to provide the surface-treated nut shell material, respectively; and wherein the surface-treated nut shells and/or surface-treated have been ground without addition of water.

Specifically, this embodiment relates to the use of surface-treated nut shells and/or surface-treated non-shelled nuts which have been optionally pre-processed, surface-treated according to step a) and subjected to grinding without water addition according to step b) as described in conjunction with the first embodiment above.

The thus obtained material may be used in any food (both for human and animal consumption) to replace conventional filler materials added to provide dietary fiber and/or bulk, such as cellulose-based or soy-based fillers, for example. Accordingly, due to the high contents of biologically active components, the ground nutshell material serves as a nutritionally beneficial alternative to commonly used, non-nutritive food fillers. Moreover, nutshell materials previously discarded as undesired by-products may be exploited, which provides both economic and environmental advantages.

It will be appreciated that the present invention may employ any of the preferred features specified above with respect to the description of the first to third embodiments, and that the preferred features may be combined in any combination, except for combinations where at least some of the features are mutually exclusive.

Once given the above disclosure, many other features, modifications, and improvements will become apparent to the skilled artisan.

## Claims

1. A method for preparing a nut paste, comprising the steps of:
a) treating the surface of nutshells and/or non-shelled nuts to remove surface contaminants from the shell material;
b) preparing a mixture comprising at least one of:
b1) surface-treated non-shelled nuts,
b2) shelled culinary nuts and surface-treated nutshells, or
b3) shelled culinary nuts and surface-treated non-shelled nuts; and
c) grinding the mixture to an average particle size of 500 µm or less to provide a nut paste, the average particle size being measured as volume moment mean (D[4,3]);
wherein almonds, pecans, walnuts, cashews, pistachios, peanuts, kola nuts, palm nuts, hazelnuts, filberts, Brazil nuts, macadamia nuts, chestnuts, or mixtures thereof are used as the non-shelled nuts or to provide the shell material, respectively;
wherein the shelled culinary nuts are selected from a tree nut, seed or legume; and
wherein the mixture contains at least 0.05 wt.-% of surface-treated nutshell material based on the total weight of solids, and wherein the mixture does not contain added water.

2. The method for preparing a nut paste according to claim 1,
wherein in step b), the surface-treated nutshells and/or the surface-treated non-shelled nuts are added until the mixture has a total fat content of from 22 to 37 wt.-%; and
wherein step c) is at least initially and preferably entirely performed with a roller mill.

3. The method for preparing a nut paste according to claim 1,
wherein the mixture prepared in step b) has a total fat content of less than 22 wt.-% or more than 37 wt.-%; and
wherein step c) is performed with a pin mill, a hammer mill, a screen mill, a colloid mill or combinations thereof.

4. The method for preparing a nut paste according to any one of claims 1 to 3,
wherein the nutshells are selected from hazelnut shells, peanut shells, walnut shells, almond shells, pistachio shells, and combinations thereof; and/or
wherein the non-shelled nuts are selected from non-shelled hazelnuts, non-shelled peanuts, non-shelled walnuts, non-shelled almonds, non-shelled pistachios, and combinations thereof.

5. The method for preparing a nut paste according to any one of claims 1 to 4, wherein the shelled culinary nuts are selected from nuts, drupe seeds, nut-like gymnosperm seeds and nut-like angiosperm seeds, preferably selected from hazelnuts, almonds, walnuts, cashews, pistachios, pecans, macadamia nuts, peanuts, and combinations thereof.

6. The method for preparing a nut paste according to any one of claims 1 to 5, wherein the surface-treated or non-shelled nuts have been subjected to a roasting step before step c), preferably at a temperature of more than 65°C and 200 °C or less, further preferably between 80 and 160°C.

7. The method for preparing a nut paste according to any one of claims 1 to 5, wherein the ground mixture obtained in step c) is subjected to a roasting step, preferably at a temperature of more than 65°C and 200 °C or less, further preferably between 80 and 160°C.

8. The method for preparing a nut paste according to any one of claims 1 to 7, wherein the mixture prepared in step b) comprises surface-treated non-shelled nuts or shelled culinary nuts and surface-treated nutshells in a (total) content of at least 1% by weight based on the total weight of solids, preferably in a total content of from 5 to 100% by weight, further preferably in a total content of from 10 to 100% by weight.

9. The method for preparing a nut paste according to any one of claims 1 to 8, wherein the mixture prepared in step b) comprises:
surface-treated non-shelled nuts or shelled culinary nuts and surface-treated nutshells in a (total) content of from 5 to 99% by weight, preferably from 10 to 98% by weight;
sweetening agents, sweeteners, or combinations thereof, in a total content of from 0.5 to 60% by weight, preferably from 1 to 40% by weight;
one or more edible oils in a total content of from 0.1 to 55% by weight, preferably from 0.5 to 45% by weight; and
one or more additives selected from milk powder, flavoring agents, emulsifiers and combinations thereof, in a total content of from 0.1 to 50% by weight, preferably from 0.5 to 40% by weight.

10. The method for preparing a nut paste according to any one of claims 1 to 8, wherein sweetening agents and/or sweeteners are added to the ground mixture after step c) and the mixture is subsequently subjected to a roasting step, preferably at a temperature of more than 65°C and 200 °C or less, further preferably between 80 and 160°C.

11. The method for preparing a nut paste according to any one of claims 1 to 10, wherein step a) includes chemical sterilization, washing in sterile water, surface sterilization or pasteurization by means of heat and/or irradiation with ionizing rays, ultrasound-based sterilization and combinations thereof.

12. The method for preparing a nut paste according to any one of claims 1 to 11, wherein step a) includes abrasive blasting of the surface of the nutshells and/or non-shelled nuts, the abrasive blasting being preferably performed with nutshell abrasives, preferably with walnut shell abrasive media.

13. The method for preparing a nut paste according to any one of claims 1 to 12, wherein the method does not comprise a defatting or deoiling step.

14. Nut paste obtainable by the method according to any one of claims 1 to 13, wherein the nut paste contains 5 wt.-% or more of the surface-treated nutshell material based on the total weight of solids.

15. Use of surface-treated nut shells and/or surface-treated non-shelled nuts in ground form as filler material providing dietary fiber and/or bulk in the preparation of food;
wherein almonds, pecans, walnuts, cashews, pistachios, kola nuts, palm nuts, hazelnuts, filberts, Brazil nuts, macadamia nuts, chestnuts, and mixtures thereof are used as the surface-treated non-shelled nuts or to provide the surface-treated nut shell material, respectively; and
wherein the surface-treated nut shells and/or surface-treated non-shelled nuts have been ground without addition of water.

## Patentansprüche

1. Verfahren zur Herstellung einer Nusspaste, umfassend die Schritte:
a) Behandeln der Oberfläche von Nussschalen und/oder ungeschälten Nüssen, um Oberflächenverunreinigungen aus dem Schalenmaterial zu entfernen;
b) Herstellen einer Mischung, die mindestens eines der folgenden Elemente umfasst:
b1) oberflächenbehandelte ungeschälte Nüsse,
b2) geschälte Speisenüsse und oberflächenbehandelte Nussschalen oder
b3) geschälte Speisenüsse und oberflächenbehandelte ungeschälte Nüsse; und
c) Mahlen der Mischung auf eine durchschnittliche Partikelgröße von 500 µm oder weniger, um eine Nusspaste bereitzustellen, wobei die durchschnittliche Partikelgröße als Volumenmomentmittelwert (D[4,3]) gemessen wird;
wobei zur Bereitstellung des Schalenmaterials bzw. als ungeschälte Nüsse Mandeln, Pekannüsse, Walnüsse, Cashewnüsse, Pistazien, Erdnüsse, Kolanüsse, Palmnüsse, Haselnüsse, Lambertsnüsse, Paranüsse, Macadamianüsse, Esskastanien oder Mischungen davon verwendet werden;
wobei die geschälten Speisenüsse aus einer Baumnuss, einem Samen oder einer Hülsenfrucht ausgewählt sind; und
wobei die Mischung mindestens 0,05 Gew.-% oberflächenbehandeltes Nussschalenmaterial basierend auf dem Gesamtgewicht der Feststoffe enthält, und wobei die Mischung kein zugesetztes Wasser enthält.

2. Verfahren zur Herstellung einer Nusspaste nach Anspruch 1,
wobei in Schritt b) die oberflächenbehandelten Nussschalen und/oder die oberflächenbehandelten ungeschälten Nüsse zugegeben werden, bis die Mischung einen Gesamtfettgehalt von 22 bis 37 Gew.-% aufweist; und
wobei Schritt c) zumindest anfänglich und vorzugsweise vollständig mit einer Walzenmühle durchgeführt wird.

3. Verfahren zur Herstellung einer Nusspaste nach Anspruch 1,
wobei die in Schritt b) hergestellte Mischung einen Gesamtfettgehalt von weniger als 22 Gew.-% oder mehr als 37 Gew.-% aufweist; und
wobei Schritt c) mit einer Stiftmühle, einer Hammermühle, einer Siebmühle, einer Kolloidmühle oder Kombinationen davon durchgeführt wird.

4. Verfahren zur Herstellung einer Nusspaste nach einem der Ansprüche 1 bis 3,
wobei die Nussschalen ausgewählt sind aus Haselnussschalen, Erdnussschalen, Walnussschalen, Mandelschalen, Pistazienschalen und Kombinationen davon; und/oder
wobei die ungeschälten Nüsse ausgewählt sind aus ungeschälten Haselnüssen, ungeschälten Erdnüssen, ungeschälten Walnüssen, ungeschälten Mandeln, ungeschälten Pistazien und Kombinationen davon.

5. Verfahren zur Herstellung einer Nusspaste nach einem der Ansprüche 1 bis 4, wobei die geschälten Speisenüsse ausgewählt sind aus Nüssen, Steinfruchtsamen, nussartigen Gymnospermensamen und nussartigen Angiospermensamen, vorzugsweise ausgewählt aus Haselnüssen, Mandeln, Walnüssen, Cashewnüssen, Pistazien, Pekannüssen, Macadamianüssen, Erdnüssen und Kombinationen davon.

6. Verfahren zur Herstellung einer Nusspaste nach einem der Ansprüche 1 bis 5, wobei die oberflächenbehandelten oder ungeschälten Nüsse vor Schritt c) einem Röstschritt unterzogen wurden, vorzugsweise bei einer Temperatur von mehr als 65°C und 200°C oder weniger, ferner bevorzugt zwischen 80 und 160°C.

7. Verfahren zur Herstellung einer Nusspaste nach einem der Ansprüche 1 bis 5, wobei die in Schritt c) erhaltene gemahlene Mischung einem Röstschritt unterzogen wird, vorzugsweise bei einer Temperatur von mehr als 65°C und 200°C oder weniger, ferner bevorzugt zwischen 80 und 160°C.

8. Verfahren zur Herstellung einer Nusspaste nach einem der Ansprüche 1 bis 7, wobei die in Schritt b) hergestellte Mischung oberflächenbehandelte ungeschälte Nüsse oder geschälte Speisenüsse und oberflächenbehandelte Nussschalen in einem (Gesamt-)Gehalt von mindestens 1 Gew.-% bezogen auf das Gesamtgewicht der Feststoffe, vorzugsweise in einem Gesamtgehalt von 5 bis 100 Gew.-%, ferner bevorzugt in einem Gesamtgehalt von 10 bis 100 Gew.-% umfasst.

9. Verfahren zur Herstellung einer Nusspaste nach einem der Ansprüche 1 bis 8, wobei die in Schritt b) hergestellte Mischung umfasst:
oberflächenbehandelte ungeschälte Nüsse oder geschälte Speisenüsse und oberflächenbehandelte Nussschalen in einem (Gesamt-)Gehalt von 5 bis 99 Gew.-%, vorzugsweise von 10 bis 98 Gew.-%;
Süßstoffe, Süßungsmittel oder Kombinationen davon in einem Gesamtgehalt von 0,5 bis 60 Gew.-%, vorzugsweise von 1 bis 40 Gew.-%;
ein oder mehrere Speiseöle in einem Gesamtgehalt von 0,1 bis 55 Gew.-%, vorzugsweise von 0,5 bis 45 Gew.-%; und
ein oder mehrere Zusatzstoffe, ausgewählt aus Milchpulver, Aromastoffen, Emulgatoren und Kombinationen davon, in einem Gesamtgehalt von 0,1 bis 50 Gew.-%, vorzugsweise von 0,5 bis 40 Gew.-%.

10. Verfahren zur Herstellung einer Nusspaste nach einem der Ansprüche 1 bis 8, wobei der gemahlenen Mischung nach Schritt c) Süßstoffe und/oder Süßungsmittel zugesetzt werden und die Mischung anschließend einem Röstschritt unterzogen wird, vorzugsweise bei einer Temperatur von über 65°C und 200°C oder weniger, ferner bevorzugt zwischen 80 und 160°C.

11. Verfahren zur Herstellung einer Nusspaste nach einem der Ansprüche 1 bis 10, wobei Schritt a) eine chemische Sterilisation, ein Waschen in sterilem Wasser, eine Oberflächensterilisation oder Pasteurisierung mittels Hitze und/oder Bestrahlung mit ionisierenden Strahlen, eine Ultraschall-basierte Sterilisation und Kombinationen davon umfasst.

12. Verfahren zur Herstellung einer Nusspaste nach einem der Ansprüche 1 bis 11, wobei Schritt a) das Strahlen der Oberfläche der Nussschalen und/oder der ungeschälten Nüsse umfasst, wobei das Strahlen vorzugsweise mit Nussschalen-Schleifmitteln, vorzugsweise mit Walnussschalen-Schleifmitteln, durchgeführt wird.

13. Verfahren zur Herstellung einer Nusspaste nach einem der Ansprüche 1 bis 12, wobei das Verfahren keinen Entfettungs- oder Entölungsschritt umfasst.

14. Nusspaste, erhältlich durch das Verfahren nach einem der Ansprüche 1 bis 13, wobei die Nusspaste 5 Gew.-% oder mehr des oberflächenbehandelten Nussschalenmaterials, bezogen auf das Gesamtgewicht der Feststoffe, enthält.

15. Verwendung von oberflächenbehandelten Nussschalen und/oder oberflächenbehandelten ungeschälten Nüssen in gemahlener Form als Füllmaterial, das Ballaststoffe und/oder Füllmasse bei der Zubereitung von Nahrungsmitteln liefert;
wobei zur Bereitstellung des Schalenmaterials bzw. als ungeschälte Nüsse Mandeln, Pekannüsse, Walnüsse, Cashewnüsse, Pistazien, Kolanüsse, Palmnüsse, Haselnüsse, Lambertsnüsse, Paranüsse, Macadamianüsse, Esskastanien und Mischungen davon verwendet werden; und
wobei die oberflächenbehandelten Nussschalen und/oder oberflächenbehandelten Nüsse ohne Schale ohne Zugabe von Wasser gemahlen wurden.

## Revendications

1. Procédé de préparation d'une pâte de noix, comprenant les étapes de :
a) traitement de la surface des coques de noix et/ou des noix non décortiquées pour retirer les contaminants de surface du matériau de coque ;
b) préparation d'un mélange comprenant au moins l'une parmi :
b1) des noix non décortiquées traitées en surface,
b2) des noix de cuisine décortiquées et des coques de noix traitées en surface, ou
b3) des noix de cuisine décortiquées et des noix non décortiquées traitées en surface ; et
c) broyage du mélange jusqu'à une taille moyenne de particule de 500 um ou moins pour fournir une pâte de noix, la taille moyenne de particule étant mesurée comme un diamètre moyen de De Brouckere (D[4, 3]) ;
dans lequel des amandes, des noix de pécan, des noix, des noix de cajou, des pistaches, des arachides, des noix de cola, des noix de palme, des noisettes, des avelines, des noix du Brésil, des noix de macadamia, des châtaignes, ou leurs mélanges sont utilisés·es comme noix non décortiquées ou pour fournir le matériau de coque, respectivement ;
dans lequel les noix de cuisine décortiquées sont sélectionnées parmi une noix d'arbre, une graine ou une légumineuse ; et
dans lequel le mélange contient au moins 0,05 % en pds de matériau de coque de noix traité en surface sur la base du poids total des matières solides, et dans lequel le mélange ne contient pas d'eau ajoutée.

2. Procédé de préparation d'une pâte de noix selon la revendication 1,
dans lequel dans l'étape b), les coques de noix traitées en surface et/ou les noix non décortiquées traitées en surface sont ajoutées jusqu'à ce que le mélange présente une teneur totale en matière grasse de 22 à 37 % en pds ; et
dans lequel l'étape c) est au moins initialement et préférablement entièrement exécutée avec un broyeur à cylindres.

3. Procédé de préparation d'une pâte de noix selon la revendication 1,
dans lequel le mélange préparé dans l'étape b) présente une teneur totale en matière grasse inférieure à 22 % en pds ou supérieure à 37 % en pds ; et
dans lequel l'étape c) est exécutée avec un broyeur à broches, un broyeur à marteaux, un broyeur à grilles, un broyeur colloïdal ou leurs combinaisons.

4. Procédé de préparation d'une pâte de noix selon l'une quelconque des revendications 1 à 3,
dans lequel les coques de noix sont sélectionnées parmi les coques de noisette, les coques d'arachide, les coques de noix, les coques d'amande, les coques de pistache, et leurs combinaisons ; et/ou
dans lequel les noix non décortiquées sont sélectionnées parmi les noisettes non décortiquées, les arachides non décortiquées, les noix non décortiquées, les amandes non décortiquées, les pistaches non décortiquées, et leurs combinaisons.

5. Procédé de préparation d'une pâte de noix selon l'une quelconque des revendications 1 à 4, dans lequel les noix de cuisine décortiquées sont sélectionnées parmi les noix, les noyaux de drupes, les graines de gymnospermes de type noix et les graines d'angiospermes de type noix, préférablement sélectionnées parmi les noisettes, les amandes, les noix, les noix de cajou, les pistaches, les noix de pécan, les noix de macadamia, les arachides, et leurs combinaisons.

6. Procédé de préparation d'une pâte de noix selon l'une quelconque des revendications 1 à 5, dans lequel les noix traitées en surface ou non décortiquées ont été soumises à une étape de torréfaction avant l'étape c), préférablement à une température de plus de 65°C et de 200°C ou moins, en outre préférablement entre 80 et 160°C.

7. Procédé de préparation d'une pâte de noix selon l'une quelconque des revendications 1 à 5, dans lequel le mélange broyé obtenu dans l'étape c) est soumis à une étape de torréfaction, préférablement à une température de plus de 65°C et de 200°C ou moins, en outre préférablement entre 80 et 160°C.

8. Procédé de préparation d'une pâte de noix selon l'une quelconque des revendications 1 à 7, dans lequel le mélange préparé dans l'étape b) comprend des noix non décortiquées traitées en surface ou des noix de cuisine décortiquées et des coques de noix traitées en surface en une teneur (totale) d'au moins 1 % en poids sur la base du poids total des matières solides, préférablement en une teneur totale de 5 à 100 % en poids, en outre préférablement en une teneur totale de 10 à 100 % en poids.

9. Procédé de préparation d'une pâte de noix selon l'une quelconque des revendications 1 à 8, dans lequel le mélange préparé dans l'étape b) comprend :
des noix non décortiquées traitées en surface ou des noix de cuisine décortiquées et des coques de noix traitées en surface en une teneur (totale) de 5 à 99 % en poids, préférablement de 10 à 98 % en poids ;
des agents édulcorants, des produits sucrants, ou leurs combinaisons, en une teneur totale de 0,5 à 60 % en poids, préférablement de 1 à 40 % en poids ;
une ou plusieurs huiles comestibles en une teneur totale de 0,1 à 55 % en poids, préférablement de 0,5 à 45 % en poids ; et
un ou plusieurs additifs sélectionnés parmi la poudre de lait, les agents aromatisants, les agents émulsifiants et leurs combinaisons, en une teneur totale de 0,1 à 50 % en poids, préférablement de 0,5 à 40 % en poids.

10. Procédé de préparation d'une pâte de noix selon l'une quelconque des revendications 1 à 8, dans lequel des agents édulcorants et/ou des produits sucrants sont ajoutés au mélange broyé après l'étape c) et le mélange est par la suite soumis à une étape de torréfaction, préférablement à une température de plus de 65°C et de 200°C ou moins, en outre préférablement entre 80 et 160°C.

11. Procédé de préparation d'une pâte de noix selon l'une quelconque des revendications 1 à 10, dans lequel l'étape a) inclut une stérilisation chimique, un lavage dans de l'eau stérile, une stérilisation de surface ou une pasteurisation à l'aide de chaleur et/ou une irradiation avec des rayons ionisants, une stérilisation à base d'ultrasons et leurs combinaisons.

12. Procédé de préparation d'une pâte de noix selon l'une quelconque des revendications 1 à 11, dans lequel l'étape a) inclut la projection abrasive de la surface des coques de noix et/ou des noix non décortiquées, la projection abrasive étant préférablement exécutée avec des abrasifs de coque de noix, préférablement avec un milieu abrasif de coque de noix.

13. Procédé de préparation d'une pâte de noix selon l'une quelconque des revendications 1 à 12, dans lequel le procédé ne comprend pas d'étape de dégraissage ni de déshuilage.

14. Pâte de noix pouvant être obtenue par le procédé selon l'une quelconque des revendications 1 à 13, dans laquelle la pâte de noix contient 5 % en pds ou plus du matériau de coque de noix traité en surface sur la base du poids total des matières solides.

15. Utilisation de coques de noix traitées en surface et/ou de noix non décortiquées traitées en surface sous une forme broyée comme matériau de charge fournissant une fibre diététique et/ou du ballast dans la préparation d'aliment ;
dans laquelle des amandes, des noix de pécan, des noix, des noix de cajou, des pistaches, des noix de cola, des noix de palme, des noisettes, des avelines, des noix du Brésil, des noix de macadamia, des châtaignes, et leurs mélanges sont utilisés comme noix non décortiquées traitées en surface ou pour fournir le matériau de coque de noix traité en surface, respectivement ; et
dans laquelle les coques de noix traitées en surface et/ou les noix non décortiquées traitées en surface ont été broyées sans addition d'eau.
